(19) **Europäisches Patentamt** / **European Patent Office** / **Office européen des brevets**

(11) **EP 4 778 402 A1**

(12) **EUROPEAN PATENT APPLICATION**
published in accordance with Art. 153(4) EPC

(43) Date of publication:
**22.07.2026   Bulletin 2026/30**

(21) Application number: **24865569.8**

(22) Date of filing: **13.09.2024**

(51) International Patent Classification (IPC):
*A23L 7/10* (2016.01)

(52) Cooperative Patent Classification (CPC):
**A23L 7/10**

(86) International application number:
**PCT/JP2024/032935**

(87) International publication number:
**WO 2025/058070 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023   JP 2023150232**

(71) Applicant: **Amano Enzyme Inc.**
**Nagoya-shi**
**Aichi 460-8630 (JP)**

(72) Inventors:
- **YANG Minghong**
  **Kakamigahara-shi, Gifu 509-0109 (JP)**
- **KIMURA Akari**
  **Kakamigahara-shi, Gifu 509-0109 (JP)**
- **ISHIGAKI Yuki**
  **Kakamigahara-shi, Gifu 509-0109 (JP)**

(74) Representative: **Mullholland, Lewis Paul**
**WP Thompson**
**44 Southampton Buildings**
**London WC2A 1AP (GB)**

(54) **MODIFIER FOR COOKED RICE, METHOD FOR MODIFYING COOKED RICE, AND METHOD FOR PRODUCING COOKED RICE**

(57)     [Problems] To provide a technology capable of modifying cooked rice to suit its intended use.

[Solution] Provided is a modifier for cooked rice, containing one or more enzymes selected from a cyclodextrin-generating enzyme, lipase, cellulase, hemicellulase, protease, α-glucosidase, a maltotriose-generating enzyme, and α-amylase, or containing a cyclodextrin-generating enzyme and 4 -α-glucanotransferase. The modifier for cooked rice according to the present technology can modify one or more qualities of cooked rice selected from aroma, ease of separating grains, distinctness of grains, sweetness, hardness, softness, and stickiness.

EP 4 778 402 A1

## Description

Technical Field

The present technology relates to a modifier for cooked rice. More specifically, the present technology relates to a modifier for cooked rice that uses a specific enzyme, a method for modifying cooked rice, and a method for producing cooked rice.

Background Art

In the food and drink industry, technologies for modifying the quality of food and drink products using various enzymes have been developed. For example, Patent Literature 1 proposes a technology that produces noodles that maintain the original appearance, shape, and flavor of the noodles, are soft enough to be crushed with the tongue, and are easy to swallow, by carrying out a step of placing noodles put in a liquid into a tank and evacuating the tank, and a step of heat-treating the noodles in a saturated steam pressure environment, in which, furthermore, the stickiness generated on the surface of the noodles is reduced, making them easier to eat, by performing an enzyme treatment step.

Furthermore, for example, Patent Literature 2 proposes a technology for maintaining the texture of cooked rice made from glutinous rice by using β-amylase, citric acid and/or a salt thereof, and a monoglycerin fatty acid ester in combination.

Citation List

Patent Literature

Patent Literature 1: Japanese Patent Application Laid-Open No. 2020-110146
Patent Literature 2: Japanese Patent Application Laid-Open No. 2018-113872

Summary of Invention

Technical Problem

Technologies for modifying the quality of food and drink products are being developed, as mentioned above, and among food and drink products, cooked rice obtained by cooking rice is used in a wide variety of ways, such as being processed into rice balls, rice bowls, fried rice, etc., or being frozen for long-term storage, in addition to being eaten as is, and therefore, modifications suited to each application are desired.

Therefore, the main objective of the present technology is to provide a technology that can modify cooked rice to suit its intended use.

Solution to Problem

The present technology first provides a modifier for cooked rice containing one or more enzymes selected from a cyclodextrin-generating enzyme, lipase, cellulase, hemicellulase, protease, α-glucosidase, a maltotriose-generating enzyme, and α-amylase, or containing a cyclodextrin-generating enzyme and 4-α-glucanotransferase.

The modifier for cooked rice according to the present technology can modify one or more qualities of cooked rice selected from aroma, ease of separating grains, distinctness of grains, sweetness, hardness, softness, and stickiness.

Next, the present technology provides a method for modifying cooked rice, which includes an enzyme addition step of adding one or more enzymes selected from a cyclodextrin-generating enzyme, lipase, cellulase, hemicellulase, protease, α-glucosidase, a maltotriose-generating enzyme, and α-amylase to rice, or adding a cyclodextrin-generating enzyme and 4-α-glucanotransferase to rice.

The present technology also provides a method for modifying cooked rice, which includes a rice cooking step of cooking rice to which one or more enzymes selected from a cyclodextrin-generating enzyme, lipase, cellulase, hemicellulase, protease, α-glucosidase, a maltotriose-generating enzyme, and α-amylase have been added, or cooking rice to which a cyclodextrin-generating enzyme and 4-α-glucanotransferase have been added.

The method for modifying cooked rice according to the present technology can modify the one or more qualities of cooked rice selected from aroma, ease of separating grains, distinctness of grains, sweetness, hardness, softness, and stickiness.

The present technology further provides a method for producing cooked rice, which includes a rice cooking step of cooking rice to which a cyclodextrin-generating enzyme has been added.

In this case, the rice may be rice to which 4-$\alpha$-glucanotransferase has been added.

Description of Embodiments

A preferred embodiment for carrying out the present technology will be described below. It should be noted that the embodiment described below is an example of typical embodiments of the present technology, and the scope of the present technology should not be interpreted as being narrowed.

1. Modifier for cooked rice

The modifier for cooked rice according to the present technology contains one or more enzymes selected from a cyclodextrin-generating enzyme, lipase, cellulase, hemicellulase, protease, $\alpha$-glucosidase, a maltotriose-generating enzyme, and $\alpha$-amylase, or contains a cyclodextrin-generating enzyme and 4-$\alpha$-glucanotransferase. If desired, other enzymes and other components may also be contained. Each component that can be used in the present technology will be described in detail below.

(1) Cyclodextrin-generating enzyme

The cyclodextrin-generating enzyme (EC 2.4.1.19) that can be used in the present technology is an enzyme that has an activity of producing cyclodextrin with a degree of polymerization of 6 to 8 using a polymer composed of $\alpha$-1,4-linked glucose, such as starch, as a substrate. The cyclodextrin-generating enzyme that can be used in the present technology may be an enzyme that also has other functions, as long as it has an activity of generating cyclodextrin.

In the present technology, by producing cooked rice using a cyclodextrin-generating enzyme, it is possible to manifest an effect of holding the aroma, an effect of improving the ease of separating grains, and an effect of enhancing the stickiness, of the cooked rice. Furthermore, the use of a cyclodextrin-generating enzyme in producing cooked rice also exerts an effect of suppressing the aging of cooked rice, and therefore, the cooked rice produced using a cyclodextrin-generating enzyme can maintain the effect of holding aroma, the effect of improving ease of separating grains, and the effect of enhancing stickiness, even after storage. Furthermore, the cooked rice produced using a cyclodextrin-generating enzyme can also exhibit an effect of enhancing the sweetness of cooked rice when stored for a predetermined period of time. In addition, the cooked rice produced using a cyclodextrin-generating enzyme is expected to also have an effect of high dietary fiber.

The origin of the cyclodextrin-generating enzyme that can be used in the present technology is not particularly limited, and examples thereof include cyclodextrin-generating enzymes derived from microorganisms of the following genera: the genus Bacillus, e.g., Bacillus stearothermophilus, Bacillus megaterium, Bacillus circulans, Bacillus macerans, Bacillus ohbensis, and Bacillus clarkii; the genus Geobacillus, e.g., Geobacillus stearothermophilus; the genus Paenibacillus, e.g., Paenibacillus macerans; the genus Klebsiella, e.g., Klebsiella pneumoniae; the genus Anoxybacillus, e.g., Anoxybacillus caldiproteolyticus, Anoxybacillus pushchinoensis, Anoxybacillus flavithermus; and the genus Thermoanaerobacter and the genus Brevibacterium. These cyclodextrin-generating enzymes may be used alone or in combination of two or more. Among these, from the viewpoint of an effect of modifying cooked rice, the cyclodextrin-generating enzyme is preferably a cyclodextrin glucanotransferase derived from a microorganism of the genus Anoxybacillus, and in the present technology, the cyclodextrin-generating enzyme is more preferably a cyclodextrin glucanotransferase derived from Anoxybacillus caldiproteolyticus (including the one formerly known as Geobacillus stearothermophilus).

Here, "cyclodextrin-generating enzyme derived from Anoxybacillus caldiproteolyticus" means a cyclodextrin-generating enzyme produced by a microorganism classified as Anoxybacillus caldiproteolyticus (which may be a wild-type strain or a mutant strain), or a cyclodextrin-generating enzyme obtained by genetic engineering technologies using a cyclodextrin-generating enzyme gene. Therefore, a recombinant produced by a host microorganism into which a cyclodextrin-generating enzyme gene obtained from Anoxybacillus caldiproteolyticus (or a gene obtained by modifying the aforementioned gene) has been introduced also falls under the category of "cyclodextrin-generating enzyme derived from Anoxybacillus caldiproteolyticus".

The cyclodextrin-generating enzyme used in the present technology can be prepared from a culture solution of the microorganism from which the cyclodextrin-generating enzyme is derived. A specific preparation method includes a method of recovering the cyclodextrin-generating enzyme from the culture solution or microbial bodies of the above-mentioned microorganism. For example, when a cyclodextrin-generating enzyme secreting type microorganism is used, the microbial bodies may be recovered from the culture solution in advance by filtration, centrifugation, or the like, if necessary, and the enzyme may then be separated and/or purified. When a cyclodextrin-generating enzyme non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available cyclodextrin-generating enzymes can also be used, and preferred examples of commercially available products include cyclodextrin glucanotransferase derived from Anoxybacillus caldiproteolyticus (Geobacillus stearothermophilus) manufactured by Amano Enzyme Inc., and the like.

The content of a cyclodextrin-generating enzyme in the modifier for cooked rice according to the present technology can be freely set as long as it does not impair the effect of the present technology. The content of a cyclodextrin-generating enzyme can be set to, for example, 0.002 U or more per 1 g of raw rice used in producing cooked rice, and from the viewpoint of further enhancing an effect of modifying cooked rice, the content can be set to preferably 0.01 U or more, more preferably 0.02 U or more, even more preferably 0.2 U or more, and even more preferably 0.35 U or more.

The upper limit of the content of a cyclodextrin-generating enzyme is not particularly limited as long as it does not impair the effect of the present technology, and can be set to, for example, 400 U or less, 300 U or less, 200 U or less, 100 U or less, 80 U or less, 60 U or less, 40 U or less, 20 U or less, 10 U or less, 5 U or less, 1 U or less, 0.8 U or less, 0.6 U or less, 0.5 U or less, or 0.45 U or less per 1 g of raw rice used to produce cooked rice.

In the present technology, the activity of a cyclodextrin-generating enzyme is a value measured by the measurement method described in the examples below.

(2) Lipase

Lipase that can be used in the present technology is an enzyme that has an activity of hydrolyzing triglycerides to produce diglycerides, monoglycerides, and fatty acids. The lipase that can be used in the present technology may be an enzyme that also has other functions, as long as it has an activity of hydrolyzing triglycerides to produce diglycerides, monoglycerides, and fatty acids.

The present technology can exhibit an effect of enhancing the sweetness, an effect of improving the softness, an effect of improving the ease of separating grains, an effect of improving the distinctness of grains, and an effect of enhancing the stickiness, of cooked rice, by producing the cooked rice using lipase. Generally, when the stickiness of cooked rice improves, ease of separating grains and distinctness of grains become worse, and the present technology discovered that adding lipase can produce cooked rice that combines the contradictory properties of distinctness of grains and stickiness. Furthermore, producing cooked rice using lipase also exerts an effect of suppressing the aging of the cooked rice, and therefore, the cooked rice produced using lipase can retain an effect of enhancing sweetness, an effect of improving softness, an effect of improving ease of separating grains, an effect of improving distinctness of grains, and an effect of enhancing stickiness, even after storage.

The origin of the lipase that can be used in the present technology is not particularly limited, and examples thereof include lipases derived from microorganisms of the genus Aspergillus, the genus Candida, the genus Rhizopus, the genus Mucor, and the genus Penicillium. These lipases may be used alone or in combination of two or more. Among these lipases, it is preferable to select a lipase derived from the genus Penicillium, and it is more preferable to select a lipase derived from Rhizopus oryzae, from the viewpoint of further enhancing the effect of modifying cooked rice.

Here, "lipase derived from Rhizopus oryzae" means a lipase produced by a microorganism classified as Rhizopus oryzae (which may be a wild-type strain or a mutant strain), or a lipase obtained by genetic engineering technologies using a lipase gene. Therefore, a recombinant produced by a host microorganism into which a lipase gene obtained from Rhizopus oryzae (or a gene obtained by modifying the aforementioned gene) has been introduced also falls under the category of "lipase derived from Rhizopus oryzae".

The lipase used in the present technology can be prepared from the culture solution of the microorganism from which the lipase is derived. A specific preparation method includes a method of recovering lipase from the culture solution or microbial bodies of the above-mentioned microorganism. For example, when a lipase secreting type microorganism is used, the microbial bodies may be recovered from the culture solution in advance by filtration, centrifugation, or the like, if necessary, and the enzyme may then be separated and/or purified. Furthermore, when a lipase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available lipases can also be used, and a preferred example of a commercially available lipase is lipase derived from Rhizopus oryzae manufactured by Amano Enzyme Inc.

The content of lipase in the modifier for cooked rice according to the present technology can be freely set as long as it does not impair the effect of the present technology. The lipase content can be set to, for example, 0.00075 U or more per 1 g of raw rice used to produce cooked rice, and from the viewpoint of further enhancing the effect of modifying cooked rice, it can be set to preferably 0.0037 U or more, more preferably 0.0075 U or more, even more preferably 0.075 U or more, and even more preferably 0.13 U or more.

The upper limit of the content of lipase is not particularly limited as long as it does not impair the effect of the present technology, but can be set to, for example, 150 U or less, 130 U or less, 110 U or less, 100 U or less, 90 U or less, 70 U or less, 50 U or less, 30 U or less, 15 U or less, 10 U or less, 5 U or less, 1 U or less, 0.5 U or less, 0.3 U or less, 0.2 U or less, or 0.17 U or less per 1 g of raw rice used to produce cooked rice.

In the present technology, the activity of lipase is a value measured by the measurement method described in the examples below.

(3) Cellulase

Cellulase that can be used in the present technology is an enzyme that hydrolyzes the glycosidic bonds of $\beta$-1,4-glucan (e.g., cellulose). The cellulase that can be used in the present technology may be an enzyme that also has other functions, as long as it has cellulase activity.

In the present technology, by producing cooked rice using cellulase, it is possible to exhibit an effect of improving the hardness of cooked rice and an effect of improving the distinctness of grains of cooked rice. That is, by producing cooked rice using cellulase, harder cooked rice with good distinctness of grains can be obtained. Furthermore, the cooked rice produced using cellulase can exhibit an effect of enhancing the sweetness of the cooked rice by storing it for a predetermined period of time.

The origin of cellulase that can be used in the present technology is not particularly limited, and examples thereof include cellulases derived from the following microorganisms: basidiomycetes, e.g., the genus Corticium, the genus Irpex, and Pycnoporus coccineus; filamentous fungi, e.g., Acremonium cellulolyticus, Aspergillus aculeatus, Aspergillus oryzae, Aspergillus sojae, Aspergillus saitoi, Aspergillus flavus, Aspergillus awamori, Aspergillus niger, Humicola insolens, Penicillium funiculosum, Trichoderma harzianum, Trichoderma insolens, Trichoderma koningii, Trichoderma longibrachiatum, Trichoderma reesei, and Trichoderma viride; actinomycetes, e.g., the genus Actinomyces and the genus Streptomyces; and bacteria, e.g., Bacillus circulans and Bacillus subtilis. Preferably, cellulase derived from a microorganism of the genus Trichoderma is used. Examples of microorganisms of the genus Trichoderma include Trichoderma reesei and Trichoderma viride. These cellulases may be used alone or in combination of two or more. Among these cellulases, from the viewpoint of further enhancing an effect of modifying cooked rice, it is preferable to select a cellulase derived from a microorganism of the genus Trichoderma, and it is more preferable to select a cellulase derived from Trichoderma viride.

Here, "cellulase derived from Trichoderma viride" means cellulase produced by a microorganism classified as Trichoderma viride (which may be a wild-type strain or a mutant strain), or cellulase obtained by genetic engineering technologies using a cellulase gene. Therefore, a recombinant produced by a host microorganism into which a cellulase gene obtained from Trichoderma viride (or a gene obtained by modifying the aforementioned gene) has been introduced also falls under the category of "cellulase derived from Trichoderma viride".

The cellulase used in the present technology can be prepared from the culture solution of the microorganism from which the cellulase is derived. A specific preparation method includes a method of recovering cellulase from the culture solution or microbial bodies of the above-mentioned microorganisms. For example, when a cellulase secreting type microorganism is used, the microbial bodies may be recovered from the culture solution in advance by filtration, centrifugation, or the like, if necessary, and the enzyme may then be separated and/or purified. Furthermore, when a cellulase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available cellulases can also be used, and a preferred example of a commercially available product is cellulase derived from a microorganism of the genus Trichoderma, manufactured by Amano Enzyme Inc.

The content of cellulase in the modifier for cooked rice according to the present technology can be freely set as long as it does not impair the effect of the present technology. The content of cellulase can be set to, for example, 0.0014 U or more per 1 g of raw rice used to produce cooked rice, and from the viewpoint of further enhancing the effect of modifying cooked rice, it can be set to preferably 0.007 U or more, more preferably 0.014 U or more, even more preferably 0.07 U or more, 0.14 U or more, and even more preferably 0.25 U or more.

The upper limit of the content of cellulase is not particularly limited as long as it does not impair the effect of the present technology, but can be set to, for example, 280 U or less, 250 U or less, 230 U or less, 200 U or less, 150 U or less, 130 U or less, 100 U or less, 90 U or less, 70 U or less, 60 U or less, 56 U or less, 50 U or less, 30 U or less, 28 U or less, 25 U or less, 23 U or less, 20 U or less, 10 U or less, 5 U or less, 3 U or less, 1 U or less, 0.56 U or less, 0.42 U or less, or 0.31 U or less per 1 g of raw rice used to produce cooked rice.

In the present technology, the activity of cellulase is a value measured by the measurement method described in the examples below.

(4) Hemicellulase

Hemicellulase that can be used in the present technology is an enzyme that hydrolyzes hemicellulose. Hemicellulose is a heteropolysaccharide, composed of multiple sugar components, and generally has a branched structure in which the main chain from which it is named is supplemented by other sugar components forming side chains. Specific examples of hemicellulose include mannan, $\beta$-1,3-1,4-glucan, glucomannan, xylan, xyloglucan, and glucuronoxylan. The enzyme that breaks down these hemicelluloses is hemicellulase.

In the present technology, by producing cooked rice using hemicellulase, it is possible to exhibit an effect of improving the distinctness of grains, an effect of improving the softness, and an effect of enhancing the stickiness, of the cooked rice. Generally, as the stickiness and softness of cooked rice are improved, the distinctness of grains becomes worse, but the present technology has found that by adding hemicellulase, cooked rice can be obtained that combines the contradictory properties of distinctness of grains with stickiness and softness. Furthermore, producing cooked rice using hemicellulase also exhibits an effect of suppressing the aging of cooked rice, and therefore, the cooked rice produced using hemicellulase can maintain an effect of improving softness and an effect of enhancing stickiness even after storage. Furthermore, by producing cooked rice using hemicellulase, the cooked rice with enhanced sweetness can be obtained.

Specific examples of hemicellulases include xylanase, galactanase, mannanase, galactomannanase, arabinase, $\beta$-glucanase, etc., and these may be used alone or in combination of two or more.

The origin of the hemicellulase is not particularly limited, and it may be hemicellulase derived from the following microorganisms: basidiomycetes, e.g., the genus Corticium and the genus Pycnoporus; filamentous fungi, e.g., the genus Aspergillus, genus Humicola, genus Penicillium, and genus Trichoderma; actinomycetes, e.g., the genus Streptomyces; bacteria, e.g., the genus Bacillus; or the like, or it may be artificially synthesized hemicellulase. These may be used alone or in combination of two or more. Among these, in the present technology, hemicellulases derived from filamentous fungi are preferred, hemicellulases derived from microorganisms of the genus Aspergillus are more preferred, and hemicellulases derived from Aspergillus niger are even more preferred.

Here, "hemicellulase derived from Aspergillus niger" means a hemicellulase produced by a microorganism classified as Aspergillus niger (which may be a wild-type strain or a mutant strain), or a hemicellulase obtained by genetic engineering technologies using a hemicellulase gene. Therefore, a recombinant produced by a host microorganism into which a hemicellulase gene obtained from Aspergillus niger (or a gene obtained by modifying the aforementioned gene) has been introduced also falls under the category of "hemicellulase derived from Aspergillus niger".

The hemicellulase used in the present technology can be prepared from the culture solution of the microorganism from which the hemicellulase is derived. A specific preparation method includes a method of recovering hemicellulase from the culture solution or microbial bodies of the above-mentioned microorganisms. For example, when a hemicellulase secreting type microorganism is used, the microbial bodies may be recovered from the culture solution in advance by filtration, centrifugation, or the like, if necessary, and the enzyme may then be separated and/or purified. Furthermore, when a hemicellulase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available hemicellulase can also be used, and a preferred example of a commercially available product is hemicellulase derived from a microorganism of the genus Aspergillus, manufactured by Amano Enzyme Inc.

The content of hemicellulase in the modifier for cooked rice according to the present technology can be freely set as long as it does not impair the effect of the present technology. The content of hemicellulase can be set to, for example, 0.45 U or more per 1 g of raw rice used to produce cooked rice, and from the viewpoint of further enhancing an effect of modifying cooked rice, it can be set to preferably 2.25 U or more, more preferably 4.5 U or more, 5 U or more, 7 U or more, 9 U or more, 10 U or more, 20 U or more, 30 U or more, 40 U or more, even more preferably 45 U or more, 60 U or more, and even more preferably 81 U or more.

The upper limit of the content of hemicellulase is not particularly limited as long as it does not impair the effect of the present technology, but can be set to, for example, 90,000 U or less, 70,000 U or less, 50,000 U or less, 30,000 U or less, 20,000 U or less, 18,000 U or less, 15,000 U or less, 13,000 U or less, 10,000 U or less, 9,000 U or less, 7,000 U or less, 5,000 U or less, 3,000 U or less, 1,000 U or less, 800 U or less, 600 U or less, 400 U or less, 200 U or less, 180 U or less, 135 U or less, 110 U or less, or 99 U or less per 1 g of raw rice used to produce cooked rice.

In the present technology, the activity of hemicellulase is a value measured by the measurement method described in the examples below.

(5) Protease

The protease that can be used in the present technology is an enzyme that catalyzes the hydrolysis of peptide bonds. The protease that can be used in the present technology may be an enzyme that also has other functions, as long as it has protease activity.

In the present technology, by producing cooked rice using protease, it is possible to exhibit an effect of improving the softness and an effect of enhancing the stickiness of the cooked rice. Furthermore, by producing cooked rice using protease, an effect of suppressing the aging of cooked rice is also exhibited, and thus the cooked rice produced using protease can maintain an effect of improving softness and an effect of enhancing stickiness, even after storage. Furthermore, it was found that by producing cooked rice using protease, the aroma and sweetness unique to the cooked rice can be reduced. That is, it was found that the flavor of cooked rice can be modified by producing the cooked rice using protease. This flavor-altering effect can be maintained even after storage. By reducing the aroma and sweetness unique to cooked rice, the influence on other seasonings and aromas can be reduced, and therefore, it is expected to be applicable to a variety of purposes.

The origin of the protease that can be used in the present technology is not particularly limited: for example, proteases derived from filamentous fungi include, but are not limited to, proteases derived from the following microorganisms: for example, the genus Aspergillus, the genus Rhizopus, the genus Mucor, the genus Neurospora, the genus Penicillium, the genus Rhizomucor, the genus Sclerotinia, and the like. Specific examples of proteases derived from the genus Aspergillus include proteases derived from the following microorganisms: Aspergillus oryzae, Aspergillus niger, Aspergillus melleus, Aspergillus japonicus, Aspergillus awamori, Aspergillus kawachii, Aspergillus sojae, Aspergillus tamarii, Aspergillus foetidus, Aspergillus fumigatus, and Aspergillus nidulans, Aspergillus aculeatus, Aspergillus candidus, Aspergillus flavus, Aspergillus saitoi, Aspergillus inuii, Aspergillus glaucus, Aspergillus caesiellus, Aspergillus clavatus, Aspergillus deflectus, Aspergillus fischerianus, Aspergillus parasiticus, Aspergillus penicilloides, Aspergillus restrictus, Aspergillus sydowii, Aspergillus terreus, Aspergillus ustus, Aspergillus versicolor, and the like.

Specific examples of proteases derived from the genus Rhizopus include proteases derived from the following microorganisms: Rhizopus chinensis, Rhizopus delemar, Rhizopus niveus, Rhizopus oryzae, and the like. Bacteria-derived proteases include proteases derived from the genus Bacillus and the genus Geobacillus. Specific examples of proteases derived from the genus Bacillus (or Geobacillus) include proteases derived from the following microorganisms: Bacillus amyloliquefaciens, Bacillus cereus, Bacillus clausii, Bacillus intermedius, Bacillus lentus, Bacillus licheniformis, Bacillus stearothermophilus, Bacillus subtilis, and Bacillus thermoproteolyticus; and proteases derived from the genus Geobacillus corresponding to them. These proteases may be used singly or in combination of two or more. Among these proteases, from the viewpoint of further enhancing the effect of modifying cooked rice, it is preferable to select a protease derived from a microorganism of the genus Bacillus, and it is more preferable to select a protease derived from Bacillus amyloliquefaciens.

Here, "protease derived from Bacillus amyloliquefaciens" means a protease produced by a microorganism classified as Bacillus amyloliquefaciens (which may be a wild-type strain or a mutant strain), or a protease obtained by genetic engineering technologies using a protease gene. Therefore, a recombinant produced by a host microorganism into which a protease gene obtained from Bacillus amyloliquefaciens (or a gene obtained by modifying the aforementioned gene) has been introduced also falls under the category of "protease derived from Bacillus amyloliquefaciens".

The protease used in the present technology can be prepared from the culture solution of the microorganism from which the protease is derived. A specific preparation method includes a method of recovering the protease from the culture solution or microbial bodies of the above-mentioned microorganism. For example, when a protease secreting type microorganism is used, the microbial bodies may be recovered from the culture solution in advance by filtration, centrifugation, or the like, if necessary, and the enzyme may then be separated and/or purified. Furthermore, when a protease non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available proteases can also be used, and a preferred example of a commercially available product is a protease derived from a microorganism of the genus Bacillus manufactured by Amano Enzyme Inc.

The content of protease in the modifier for cooked rice according to the present technology can be freely set as long as it does not impair the effect of the present technology. The content of protease can be set to, for example, 0.35 U or more per 1 g of raw rice used to produce cooked rice, and from the viewpoint of further enhancing the effect of modifying cooked rice, it can be set to preferably 1.75 U or more, more preferably 3.5 U or more, 4 U or more, 6 U or more, 8 U or more, 10 U or more, 20 U or more, 30 U or more, even more preferably 35 U or more, 50 U or more, 60 U or more, and even more preferably 63 U or more.

The upper limit of the content of protease is not particularly limited as long as it does not impair the effect of the present technology, and can be set to, for example, 70,000 U or less, 50,000 U or less, 30,000 U or less, 20,000 U or less, 14,000 U or less, 12,000 U or less, 10,000 U or less, 9,000 U or less, 7,000 U or less, 5,000 U or less, 3,000 U or less, 1,000 U or less, 900 U or less, 700 U or less, 500 U or less, 300 U or less, 200 U or less, 140 U or less, 105 U or less, 90 U or less, 80 U or less, or 77 U or less per 1 g of raw rice used to produce cooked rice.

In the present technology, the activity of protease is a value measured by the measurement method described in the examples below.

(6) $\alpha$-Glucosidase

The $\alpha$-glucosidase that can be used in the present technology is an enzyme that catalyzes the reaction of hydrolyzing $\alpha$-1,4-glucosidic bonds. The $\alpha$-glucosidase that can be used in the present technology may be an enzyme that also has other functions, as long as it has $\alpha$-glucosidase activity.

In the present technology, by producing cooked rice using $\alpha$-glucosidase, it is possible to manifest an effect of holding the aroma, an effect of enhancing the sweetness, an effect of improving the softness, and an effect of enhancing the stickiness, of cooked rice. Furthermore, the use of $\alpha$-glucosidase in producing cooked rice also exerts an effect of suppressing the aging of cooked rice, and therefore, the cooked rice produced using $\alpha$-glucosidase can maintain the effect of enhancing sweetness, the effect of improving softness, and the effect of enhancing stickiness. Furthermore, the cooked rice produced using $\alpha$-glucosidase can also exhibit an effect of improving distinctness of grains by storing it for a predetermined period of time.

The origin of $\alpha$-glucosidase that can be used in the present technology is not particularly limited; and examples thereof include $\alpha$-glucosidases derived from plants (rice, millet, leeks, mung beans, buckwheat, etc.) and $\alpha$-glucosidases derived from microorganisms, such as $\alpha$-glucosidases derived from filamentous fungi, e.g., the genus Aspergillus, yeasts, e.g., the genus Saccharomyces, and bacteria, e.g., the genus Bacillus. These $\alpha$-glucosidases may be used alone or in combination of two or more. Among these $\alpha$-glucosidases, it is preferable to select $\alpha$-glucosidase derived from a microorganism of the genus Aspergillus, from the viewpoint of further enhancing the effect of modifying cooked rice.

Here, "$\alpha$-glucosidase derived from a microorganism of the genus Aspergillus" means an $\alpha$-glucosidase produced by a microorganism classified into the genus Aspergillus (which may be a wild-type strain or a mutant strain), or an $\alpha$-glucosidase obtained by genetic engineering technologies using an $\alpha$-glucosidase gene. Therefore, a recombinant produced by a host microorganism into which an $\alpha$-glucosidase gene obtained from a microorganism of the genus Aspergillus (or a gene obtained by modifying the aforementioned gene) has been introduced also falls under the category of "$\alpha$-glucosidase derived from a microorganism of the genus Aspergillus ".

The $\alpha$-glucosidase used in the present technology can be prepared from the culture solution of the microorganism from which the $\alpha$-glucosidase is derived. A specific preparation method includes a method of recovering $\alpha$-glucosidase from the culture solution or microbial bodies of the above-mentioned microorganisms. For example, when an $\alpha$-glucosidase secreting type microorganism is used, the microbial bodies may be recovered from the culture solution in advance by filtration, centrifugation, or the like, if necessary, and the enzyme may then be separated and/or purified.

Furthermore, when an α-glucosidase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available α-glucosidases can also be used, and a preferred example of a commercially available product is α-glucosidase derived from a microorganism of the genus Aspergillus, manufactured by Amano Enzyme Inc.

The content of α-glucosidase in the modifier for cooked rice according to the present technology can be freely set as long as it does not impair the effect of the present technology. The content of α-glucosidase can be set to, for example, 0.00055 U or more per 1 g of raw rice used to produce cooked rice, and from the viewpoint of further enhancing the effect of modifying cooked rice, it can be set to preferably 0.0027 U or more, more preferably 0.0055 U or more, even more preferably 0.055 U or more, and even more preferably 0.099 U or more.

The upper limit of the content of α-glucosidase is not particularly limited as long as it does not impair the effect of the present technology, and can be set to, for example, 110 U or less, 100 U or less, 80 U or less, 70 U or less, 50 U or less, 30 U or less, 22 U or less, 11 U or less, 9 U or less, 5 U or less, 3 U or less, 1 U or less, 0.5 U or less, 0.3 U or less, 0.22 U or less, 0.17 U or less, or 0.13 U or less per 1 g of raw rice used to produce cooked rice.

In the present technology, the activity of α-glucosidase is a value measured by the measurement method described in the examples below.

(7) Maltotriose-generating enzyme

The maltotriose-generating enzyme that can be used in the present technology is an enzyme that has an activity of treating starch to produce mainly maltotriose. The maltotriose-generating enzyme that can be used in the present technology may be an enzyme that also has other functions, as long as it has an activity of generating maltotriose.

In the present technology, by producing cooked rice using a maltotriose-generating enzyme, it is possible to manifest an effect of holding the aroma, an effect of improving the ease of separating grains, an effect of improving the distinctness of grains, an effect of enhancing the sweetness, an effect of improving the hardness, and an effect of enhancing the stickiness, of the cooked rice. In other words, by using a maltotriose-generating enzyme, it is possible to obtain better-balanced cooked rice.

The origin of the maltotriose-generating enzyme that can be used in the present technology is not particularly limited, and examples thereof include maltotriose-generating enzymes derived from microorganisms of the genus Streptomyces, the genus Bacillus, the genus Microbacterium, and the genus Cellulosimicrobium. These maltotriose-generating enzymes may be used alone or in combination of two or more. Among these maltotriose-generating enzymes, preferred is a maltotriose-generating enzyme derived from a microorganism of the genus Microbacterium, and more preferred is a maltotriose-generating enzyme derived from Microbacterium sp. Specifically, enzymes that exhibit substrate specificity treating amylose, amylopectin, glycogen, and starch can be used.

Here, "maltotriose-generating enzyme derived from Microbacterium sp." means a maltotriose-generating enzyme produced by a microorganism classified as Microbacterium sp. (which may be a wild-type strain or a mutant strain), or a maltotriose-generating enzyme obtained by genetic engineering technologies using a maltotriose-generating enzyme gene. Therefore, a recombinant produced by a host microorganism into which a maltotriose-generating enzyme gene obtained from Microbacterium sp. (or a gene obtained by modifying the aforementioned gene) has been introduced also falls under the category of "maltotriose-generating enzyme derived from Microbacterium sp.".

The maltotriose-generating enzyme used in the present technology can be prepared from the culture solution of the microorganism from which the maltotriose-generating enzyme is derived. A specific preparation method includes a method of recovering the maltotriose-generating enzyme from the culture solution or microbial bodies of the above-mentioned microorganism. For example, when a maltotriose-generating enzyme secreting type microorganism is used, the microbial bodies may be recovered from the culture solution in advance by filtration, centrifugation, or the like, if necessary, and the enzyme may then be separated and/or purified. Furthermore, when a maltotriose-generating enzyme non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available maltotriose-generating enzymes can also be used, and a preferred example of a commercially available product is a maltotriose-generating enzyme derived from Microbacterium sp. manufactured by Amano Enzyme Inc.

The content of the maltotriose-generating enzyme in the modifier for cooked rice according to the present technology can be freely set as long as it does not impair the effect of the present technology. The content of the maltotriose-generating enzyme can be set to, for example, 0.006 U or more per 1 g of raw rice used to produce cooked rice, and from the viewpoint of further enhancing the effect of modifying cooked rice, it can be set to preferably 0.03 U or more, more preferably 0.06 U or more, even more preferably 0.6 U or more, and even more preferably 1.08 U or more.

The upper limit of the content of the maltotriose-generating enzyme is not particularly limited as long as it does not impair the effect of the present technology, but can be set to, for example, 1200 U or less, 1000 U or less, 800 U or less, 600 U or less, 400 U or less, 300 U or less, 240 U or less, 150 U or less, 120 U or less, 100 U or less, 80 U or less, 50 U or less, 30 U or less, 10 U or less, 5 U or less, 3 U or less, 2.4 U or less, 1.8 U or less, or 1.32 U or less per 1 g of raw rice used to produce cooked rice.

In the present technology, the activity of the maltotriose-generating enzyme is a value measured by the measurement method described in the examples below.

(8) α-Amylase

The α-amylase that can be used in the present technology is an enzyme that treats starch to mainly hydrolyze α-1,4 glycosidic bonds. The α-amylase that can be used in the present technology may be an enzyme that also has other functions, as long as it has α-amylase activity.

In the present technology, by producing cooked rice using α-amylase, it is possible to manifest an effect of improving the ease of separating grains and an effect of enhancing the stickiness, of the cooked rice. Generally, as the stickiness of cooked rice increases, its ease of separating grains decreases, but, with the present technology, it has been discovered that by adding α-amylase, cooked rice can be obtained that has both the contradictory properties of ease of separating grains and stickiness.

The origin of the α-amylase that can be used in the present technology is not particularly limited, and examples thereof include α-amylases derived from microorganisms of the genus Aspergillus (e.g., Aspergillus oryzae, Aspergillus niger, etc.) and the genus Bacillus (e.g., Bacillus amyloliquefaciens, Bacillus subtilis, Bacillus licheniformis, etc.), preferably α-amylases derived from microorganisms of the genus Bacillus, more preferably α-amylases derived from Bacillus amyloliquefaciens.

Here, "α-amylase derived from Bacillus amyloliquefaciens" means an α-amylase produced by a microorganism classified as Bacillus amyloliquefaciens (which may be a wild-type strain or a mutant strain), or an α-amylase obtained by genetic engineering technologies using an α-amylase gene. Therefore, a recombinant produced by a host microorganism into which an α-amylase gene obtained from Bacillus amyloliquefaciens (or a gene obtained by modifying the aforementioned gene) has been introduced also falls under the category of "α-amylase derived from Bacillus amyloliquefaciens".

The α-amylase used in the present technology can be prepared from the culture solution of the microorganism from which the α-amylase is derived. A specific preparation method includes a method of recovering α-amylase from the culture solution or microbial bodies of the above-mentioned microorganisms. For example, when an α-amylase secreting type microorganism is used, the microbial bodies may be recovered from the culture solution in advance by filtration, centrifugation, or the like, if necessary, and the enzyme may then be separated and/or purified. When an α-amylase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available α-amylases can also be used, and a preferred example of a commercially available product is α-amylase (derived from Bacillus amyloliquefaciens) manufactured by Amano Enzyme Inc.

The content of α-amylase in the modifier for cooked rice according to the present technology can be freely set as long as it does not impair the effect of the present technology. The content of α-amylase can be set to, for example, 0.022 U or more per 1 g of raw rice used to produce cooked rice, and from the viewpoint of further enhancing the effect of modifying cooked rice, it can be set to preferably 0.11 U or more, more preferably 0.22 U or more, even more preferably 2.25 U or more, and even more preferably 4.05 U or more.

The upper limit of the content of α-amylase is not particularly limited as long as it does not impair the effect of the present technology, and can be set to, for example, 4500 U or less, 4000 U or less, 3000 U or less, 1000 U or less, 900 U or less, 700 U or less, 500 U or less, 450 U or less, 350 U or less, 200 U or less, 100 U or less, 80 U or less, 60 U or less, 40 U or less, 20 U or less, 10 U or less, 9 U or less, 7 U or less, 6.75 U or less, or 4.95 U or less per 1 g of raw rice used to produce cooked rice.

In the present technology, the activity of α-amylase is a value measured by the measurement method described in the examples below.

(9) 4-α-Glucanotransferase

The 4-α-glucanotransferase (EC 2.4.1.25) used in the present technology is an enzyme that catalyzes a chemical reaction that transfers a portion of 1,4-α-glucan to another portion of a hydrocarbon such as glucose or 1,4-α-D-glucan. The 4-α-glucanotransferase used in the present technology may be an enzyme that also has other functions, as long as it has an activity of treating polysaccharides and oligosaccharides having α-1,4 glycosidic bonds to transfer maltotriose units to saccharides.

In the present technology, cooked rice is produced using the above-mentioned cyclodextrin-generating enzyme and 4-α-glucanotransferase in combination, thereby making it possible to obtain harder cooked rice with good distinctness of grains.

The 4-α-glucanotransferase may be derived from a plant or a microorganism: plant-derived examples include 4-α-glucanotransferases derived from potato (Solanum tuberosum L.) tubers, and microorganism-derived examples include 4-α-glucanotransferases derived from actinomycetes (Streptomyces avermitilis, Streptomyces cinnamoneus, Streptomyces griseus, Streptomyces thermoviolaceus, and Streptomyces violaceoruber) or bacteria (Agrobacterium radiobacter, the genus Arthrobacter, the genus Bacillus, the genus Erwinia, Geobacillus pallidus, Geobacillus stearothermophilus, Gluconobacter oxydans, Leuconostoc mesenteroides, Paenibacillus alginolyticus, the genus Pimelobacter, the genus Protaminobacter, the genus Pseudomonas, the genus Serratia, Sporosarcina globispora and the genus Thermus, and Aeribacillus pallidus). These 4-α-glucanotransferases may be used alone or in combination of two or more. In particular, from the viewpoint of the effect of modifying cooked rice, it is preferable to use a 4-α-glucanotransferase derived from a microorganism, more preferably a 4-α-glucanotransferase derived from Aeribacillus, and even more preferably a 4-α-glucanotransferase derived from Aeribacillus pallidus (including the one formerly known as Geobacillus pallidus).

Here, "4-α-glucanotransferase derived from Aeribacillus pallidus" means a 4-α-glucanotransferase produced by a microorganism classified as Aeribacillus pallidus (which may be a wild-type strain or a mutant strain), or a 4-α-glucanotransferase obtained by genetic engineering technologies using the 4-α-glucanotransferase gene. Therefore, a recombinant produced by a host microorganism into which a 4-α-glucanotransferase gene obtained from Aeribacillus pallidus (or a gene obtained by modifying the aforementioned gene) has been introduced also falls under the category of "4-α-glucanotransferase derived from Aeribacillus pallidus".

The 4-α-glucanotransferase used in the present technology can be prepared from the culture solution of the microorganism from which the 4-α-glucanotransferase is derived. A specific preparation method includes a method of recovering 4-α-glucanotransferase from the culture solution or microbial bodies of the above-mentioned microorganisms. For example, when a 4-α-glucanotransferase secreting type microorganism is used, the microbial bodies may be recovered from the culture solution in advance by filtration, centrifugation, or the like, if necessary, and the enzyme may then be separated and/or purified. Furthermore, when a 4-α-glucanotransferase non-secreting type microorganism is used, the microbial bodies may be recovered from the culture solution in advance, if necessary, and then the microbial bodies may be disrupted by pressure treatment, ultrasonic treatment, or the like to extract the enzyme, which may then be separated and/or purified. As a method for separating and/or purifying the enzyme, any known protein separation and/or purification method can be used without any particular limitation, and examples thereof include centrifugation, UF concentration, salting out, and various chromatographic methods using ion exchange resins, etc. The separated and/or purified enzyme can be powdered by a drying method such as freeze-drying or vacuum drying, and can also be powdered using an appropriate excipient and/or drying aid in the drying method. The separated and/or purified enzyme can also be formulated as a liquid by adding an appropriate additive and sterilizing by filtration.

In the present technology, commercially available 4-α-glucanotransferases can also be used, and preferred examples of commercially available products include 4-α-glucanotransferases derived from Aeribacillus pallidus (Geobacillus pallidus) manufactured by Amano Enzyme Inc.

The content of 4-α-glucanotransferase in the modifier for cooked rice according to the present technology can be freely set as long as it does not impair the effect of the present technology. The content of 4-α-glucanotransferase can be set to, for example, 0.015 U or more per 1 g of raw rice used to produce cooked rice, and from the viewpoint of further enhancing the effect of modifying cooked rice, it can be set to preferably 0.05 U or more, 0.075 U or more, more preferably 0.15 U or more, even more preferably 1.5 U or more, and even more preferably 2.7 U or more.

The upper limit of the content of 4-$\alpha$-glucanotransferase is not particularly limited as long as it does not impair the effect of the present technology, but can be set to, for example, 3000 U or less, 1000 U or less, 800 U or less, 600 U or less, 300 U or less, 100 U or less, 50 U or less, 10 U or less, 5 U or less, 4 U or less, or 3 U or less per 1 g of raw rice used to produce cooked rice.

In the present technology, the activity of 4-$\alpha$-glucanotransferase is a value measured by the measurement method described in the examples below.

(10) Other components

The modifier for cooked rice according to the present technology can be used in combination with other components as long as they do not impair the action and effect of the present technology. Examples of other components include excipients, pH adjusters, colorants, flavoring agents, disintegrants, lubricants, stabilizers, enzymes, and other components that are commonly used in pharmaceutical formulations. Furthermore, components having known or future functions can also be used in combination appropriately depending on the purpose.

2. Method for modifying cooked rice

The method for modifying cooked rice according to the present technology is a method including: an enzyme addition step of adding one or more enzymes selected from a cyclodextrin-generating enzyme, lipase, cellulase, hemicellulase, protease, $\alpha$-glucosidase, a maltotriose-generating enzyme, and $\alpha$-amylase to rice, or adding a cyclodextrin-generating enzyme and 4-$\alpha$-glucanotransferase to rice, and/or, a rice cooking step of cooking rice to which one or more enzymes selected from a cyclodextrin-generating enzyme, lipase, cellulase, hemicellulase, protease, $\alpha$-glucosidase, a maltotriose-generating enzyme, and $\alpha$-amylase have been added, or cooking rice to which a cyclodextrin-generating enzyme and 4-$\alpha$-glucanotransferase have been added.

The enzyme addition step and the rice cooking step may be carried out in the same facility or in different facilities. For example, one facility may carry out the enzyme addition step and then cook the enzyme-added rice obtained, or one facility may carry out the enzyme addition step and distribute the enzyme-added rice obtained, and another facility may carry out a step of cooking the enzyme-added rice.

In the method for modifying cooked rice according to the present technology, in addition to the enzyme addition step and/or rice cooking step, it is also possible to appropriately select and perform a soaking step, a storing step, a freezing step, a thawing step, a processing step, a recovery step, and other steps commonly used in the production of cooked rice. The raw materials used in the present technology and each step will be described in detail below.

(1) Raw materials

The present technology uses rice as the raw material. The type of rice is not particularly limited, and for example, one or more types of rice such as Japonica rice, Indica rice, Javanica rice, etc. can be used. Either non-glutinous rice or glutinous rice can be used, and a blend of non-glutinous rice and glutinous rice can also be used. Furthermore, the degree of polishing of the rice is not particularly limited, and brown rice, polished rice with germ, partially polished rice (five-tenths), partially polished rice (seven-tenths), polished white rice, pre-washed rice, etc. may be used alone or in combination of two or more kinds. It may also be new rice, rice harvested one year ago, rice harvested two years ago, or a blend of these.

If necessary, the rice can be made into a multigrain rice blended with grains other than rice (for example, barley, germinated brown rice, adzuki beans, black beans, glutinous millet, sorghum, glutinous foxtail millet, amaranth, quinoa, pearl oats, barnyard millet, corn, black sesame, white sesame, etc.), and various components and seasonings can be used depending on the purpose and use.

(2) Enzyme addition step

The enzyme addition step is a step of adding one or more enzymes selected from a cyclodextrin-generating enzyme, lipase, cellulase, hemicellulase, protease, $\alpha$-glucosidase, a maltotriose-generating enzyme, $\alpha$-amylase, and 4-$\alpha$-glucanotransferase to rice. These enzymes may be used alone or in combination of two or more. When two or more enzymes are used in combination, the two or more enzymes may be added simultaneously or separately to the starch-containing material. When two or more enzymes are added separately, the order in which they are added is not particularly limited. The details and amounts of each enzyme added are the same as those used in the aforementioned modifier for cooked rice, so a detailed explanation will be omitted here.

The specific method for adding the enzyme is not particularly limited, and as long as the enzyme can be added to rice before the rice cooking step described below, it can be added by any method and at any timing. For example, there are methods of adding the enzyme to raw rice, methods of adding the enzyme to washed rice, methods of adding the enzyme when the rice is soaked in water, and methods of adding the enzyme to the rice just before cooking, and the enzyme can also be added in two or more batches.

(3) Soaking step

The soaking step is a step of soaking rice in water. The soaking step is not an essential step in the present technology, but is preferably performed from the viewpoint of smoothly proceeding treatment of rice with an enzyme. Regarding the timing for treating rice with an enzyme, rice may be treated with an enzyme in the soaking step, rice may be treated with an enzyme in a rice cooking step described later, or rice may be treated with an enzyme during both the soaking step and the rice cooking step.

The soaking step may be carried out simultaneously with the enzyme addition step or in any order. That is, rice to which the enzyme has been added may be soaked in water, or the enzyme may be added to rice that has been soaked in water. Further, when the rice to which the enzyme has been added is soaked in water, further enzymes can be added. Furthermore, the same or different enzymes may be added in multiple batches to the rice soaked in water.

The various conditions in the soaking step can be freely set as long as they do not impair the effect of the present technology. For example, when an enzyme is used for treatment in the soaking step, the pH, temperature, treatment time, etc. can be set depending on the physicochemical properties of the enzyme used, such as the optimum pH, stable pH range, optimum temperature, and temperature stability. The optimum conditions can be determined through preliminary experiments. The soaking conditions when using each enzyme are exemplified below.

[Cyclodextrin-generating enzyme]

When the rice to which the cyclodextrin-generating enzyme has been added is soaked in water, the pH can be set to, for example, pH 3.0 to 11.0, preferably pH 4.0 to 9.0, and more preferably pH 5.0 to 7.0. The temperature can be set to, for example, 30°C to 90°C, preferably 30°C to 80°C, and more preferably 30°C to 50°C. The treatment time can be set to, for example, from 10 minutes to 48 hours, preferably from 15 minutes to 24 hours, and more preferably from 30 minutes to 4 hours.

[Lipase]

When the rice to which lipase has been added is soaked in water, the pH can be set to, for example, pH 3.0 to 9.0, preferably pH 4.0 to 8.0, and more preferably pH 5.0 to 7.0. The temperature can be set to, for example, 25°C to 60°C, preferably 25°C to 50°C, and more preferably 25°C to 40°C. The treatment time can be set to, for example, from 10 minutes to 48 hours, preferably from 30 minutes to 24 hours, and more preferably from 1 hour to 4 hours.

[Cellulase]

When the rice to which cellulase has been added is soaked in water, the pH can be set to, for example, pH 2.0 to 9.0, preferably pH 4.0 to 8.0, and more preferably pH 5.0 to 7.0. The temperature can be set to, for example, 20°C to 70°C, preferably 25°C to 60°C, and more preferably 25°C to 50°C. The treatment time can be set to, for example, from 10 minutes to 48 hours, preferably from 30 minutes to 24 hours, and more preferably from 1 hour to 4 hours.

[Hemicellulase]

When the rice to which hemicellulase has been added is soaked in water, the pH can be set to, for example, pH 2.0 to 11.0, preferably pH 3.0 to 10.0, pH 4.0 to 8.0, and more preferably pH 5.0 to 7.0. The temperature can be set to, for example, 20°C to 60°C, preferably 25°C to 50°C, and more preferably 25°C to 40°C. The treatment time can be set to, for example, from 1 to 30 hours, preferably from 30 minutes to 20 hours, and more preferably from 1 to 4 hours.

[Protease]

When the rice to which the protease has been added is soaked in water, the pH can be set to, for example, pH 4.0 to 11.0, preferably pH 4.5 to 8.0, and more preferably pH 5.0 to 7.0. The temperature can be set to, for example, 20°C to 70°C, preferably 25°C to 60°C, and more preferably 25°C to 50°C. The treatment time can be set to, for example, from 1 to 30 hours, preferably from 30 minutes to 20 hours, and more preferably from 1 to 4 hours.

[α-Glucosidase]

When the rice to which α-glucosidase has been added is soaked in water, the pH can be set to, for example, pH 3.0 to 8.0, preferably pH 4.0 to 7.5, and more preferably pH 5.0 to 7.0. The temperature can be set to, for example, 20°C to 70°C, preferably 25°C to 60°C, and more preferably 25°C to 50°C. The treatment time can be set to, for example, from 1 to 30 hours, preferably from 30 minutes to 20 hours, and more preferably from 1 to 4 hours.

[Maltotriose-generating enzyme]

When the rice to which the maltotriose-generating enzyme has been added is soaked in water, the pH can be set to, for example, 4.0 to 10.0, preferably 4.5 to 9.0, and more preferably 5.0 to 7.0. The temperature can be set to, for example, 20°C to 70°C, preferably 25°C to 60°C, and more preferably 25°C to 50°C. The treatment time can be set to, for example, from 10 minutes to 12 hours, preferably from 30 minutes to 6 hours, and more preferably from 1 hour to 4 hours.

[α-Amylase]

When the rice to which α-amylase has been added is soaked in water, the pH can be set to, for example, pH 3.0 to 10.0, preferably pH 4.5 to 8.0, and more preferably pH 5.0 to 7.0. The temperature can be set to, for example, 10°C to 80°C, preferably 20°C to 70°C, and more preferably 30°C to 50°C. The treatment time can be set to, for example, from 10 minutes to 12 hours, preferably from 30 minutes to 6 hours, and more preferably from 1 hour to 4 hours.

[4-α-Glucanotransferase]

When the rice to which 4-α-glucanotransferase has been added is soaked in water, the pH can be set to, for example, pH 3.0 to 11.0, preferably pH 4.0 to 9.0, and more preferably pH 5.0 to 7.0. The temperature can be set to, for example, 20°C to 80°C, preferably 25°C to 70°C, and more preferably 25°C to 60°C. The treatment time can be set to, for example, from 10 minutes to 48 hours, preferably from 15 minutes to 24 hours, and more preferably from 30 minutes to 4 hours.

Other components may be added to the water used in the soaking step as long as they do not impair the action and effect of the present technology. Other components that can be used include, for example, various seasonings, various components, pH adjusters, colorants, flavoring agents, stabilizers, enzymes, and the like. Furthermore, components having known or future functions can be added as appropriate depending on the purpose.

(4) Rice cooking step

The rice cooking step is a step of cooking rice to which one or more enzymes selected from a cyclodextrin-generating enzyme, lipase, cellulase, hemicellulase, protease, α-glucosidase, a maltotriose-generating enzyme, and α-amylase have been added, or cooking rice to which a cyclodextrin-generating enzyme and 4-α-glucanotransferase have been added.

In the present technology, cooking rice means heating rice while adding water. The heating method is not particularly limited, and examples thereof include boiling, steaming, baking, microwave heating, etc., and a combination of these methods may also be used. Cooking rice can also be performed using a rice cooker or rice kettle.

The rice cooking conditions can be freely set as long as they do not impair the effect of the present technology. For example, the conditions can be freely set depending on the type and amount of rice used, the type and amount of components used in combination, the purpose of the cooked rice, etc.

(5) Storing step

The storing step is a step of storing cooked rice after cooking. The storing step is not an essential step in the present technology, but, as described above, for example, cooked rice produced using a cyclodextrin-generating enzyme or cellulase can exhibit an effect of enhancing the sweetness of the cooked rice by storing it for a predetermined period of time, and cooked rice produced using α-glucosidase can exhibit an effect of improving distinctness of grains by storing it for a predetermined period of time. Therefore, by performing the storing step, further modification of the cooked rice can be achieved.

The various conditions in the storing step can be freely set as long as they do not impair the effect of the present technology. The storage temperature can be set to, for example, -40°C to 40°C, preferably -30°C to 30°C, and more preferably -25°C to 25°C. The storage time can be set to, for example, 1 hour or more, preferably 6 hours or more, more preferably 12 hours or more, and even more preferably 20 hours or more. The upper limit of the storage time can be set appropriately depending on the storage temperature and storage method. For example, the storage time can be freely set to one year or less, six months or less, three months or less, etc. when stored in the freezing temperature range; seven days or less, five days or less, three days or less, etc. when stored in the chilled temperature range; and three days or less, two days or less, etc. when stored in the refrigerated temperature range.

Furthermore, in the processing step described below, when processing the cooked rice into vacuum-packed cooked rice, retort-packed cooked rice, or the like, the storage time can be freely set depending on the processing method.

The storing step may be carried out by the same facility as that which carries out the enzyme addition step and the rice cooking step, or may be carried out by a different facility. For example, one facility can cook and store cooked rice, or one facility can distribute cooked rice and another facility can store the cooked rice.

(6) Freezing step

The freezing step is a step of freezing cooked rice after cooking. The freezing step is not an essential step in the present technology, but can be carried out, for example, when the storing step involves storing in the freezing temperature range.

The timing for performing the freezing step is not particularly limited as long as it is performed after the rice cooking step, as long as the action and effect of the present technology are not impaired. The freezing step can be carried out after the storing step, or the storing step can also be carried out in the freezing temperature range after the freezing step. Alternatively, after the storing step in the chilled temperature range or refrigerated temperature range, the freezing step may be carried out, and then the storing step may be carried out again in the freezing temperature range.

The conditions for the freezing step are not particularly limited as long as they do not impair the action and effect of the present technology, and any general freezing method can be freely adopted. For example, freezing at around -20°C can be used.

The freezing step may be carried out by the same facility as that which carries out the enzyme addition step, rice cooking step, and storing step, or by a different facility. For example, one facility can freeze cooked rice and then store it, or another facility can freeze cooked rice and distribute it as frozen rice, and another facility can store the frozen rice.

(7) Thawing step

The thawing step is a step of thawing frozen cooked rice. The thawing step is not an essential step in the present technology, but for example, if a freezing step is performed, thawing can be performed before eating.

The specific method for the thawing step is not particularly limited as long as it does not impair the action and effect of the present technology, and any general thawing method can be freely adopted. For example, there are methods of thawing at room temperature, methods of thawing at refrigeration temperature, methods of thawing under running water, methods of thawing with heating such as microwave heating, hot water bath, steaming, boiling, baking, or the like.

The thawing step may be carried out in the same facility as for the enzyme addition step, rice cooking step, storing step, and freezing step, or may be carried out in a different facility. For example, one facility may freeze and store cooked rice and then thaw it, or one facility may distribute the cooked rice, another facility may perform a step of freezing the cooked rice and distribute the frozen cooked rice, and yet another facility may thaw the frozen cooked rice. It is also possible for consumers who purchase frozen cooked rice that has been distributed to thaw it.

(8) Processing step

The processing step is a step in which cooked rice obtained through the rice cooking step is processed according to the purpose and use. The processing step is not an essential step in the present technology, but can be carried out as necessary.

As for the specific method in the processing step, one or more general methods for processing cooked rice can be selected and used, as long as the action and effect of the present technology are not impaired. For example, methods of processing into vacuum-packed cooked rice, retort-packed cooked rice, dried cooked rice, etc., and methods of cooking and processing into takikomi gohan (seasoned), fried rice, pilaf, doria, paella, porridge, rice balls, sushi, etc. are mentioned.

The timing for performing the processing step is not particularly limited as long as it is performed after the enzyme addition step, as long as the action and effect of the present technology are not impaired. For example, cooked rice obtained by the rice cooking step can be processed, or when the rice is to be used in takikomi gohan (seasoned), pilaf, paella, etc., the rice cooking step and the processing steps can be carried out simultaneously. Furthermore, the processing step can be carried out after thawing the frozen cooked rice, or the cooked rice that has been processed by the processing step can be frozen and stored.

The processing step may be carried out by the same facility as for the enzyme addition step, rice cooking step, storing step, freezing step, and thawing step, or may be carried out by different facilities. For example, one facility may process cooked rice obtained by rice cooking, or one facility may distribute the cooked rice obtained by rice cooking, and another facility may carry out a step of processing the cooked rice. It is also possible for consumers who purchase the distributed cooked rice to process it.

(9) Recovery step

The recovery step is a step of recovering cooked rice or processed cooked rice obtained through an enzyme addition step and/or a rice cooking step, and, if necessary, a soaking step, a storing step, a freezing step, a thawing step, a processing step, etc. As for the specific recovery method, one or a combination of two or more recovery methods generally used in the production of cooked rice can be used freely depending on the condition and type of the obtained cooked rice.
The method according to the present technology described above can be embodied as including the following steps A to K.

A: a step of preparing rice and other raw materials as needed.
B: a step of adding one or more enzymes selected from a cyclodextrin-generating enzyme, lipase, cellulase, hemicellulase, protease, $\alpha$-glucosidase, a maltotriose-generating enzyme, and $\alpha$-amylase to the prepared rice and the like, or adding a cyclodextrin-generating enzyme and 4-$\alpha$-glucanotransferase to the prepared rice and the like.
C: a step of adding water.
D: a step of soaking the rice in water.
E: a step of cooking the rice to which one or more enzymes selected from a cyclodextrin-generating enzyme, lipase, cellulase, hemicellulase, protease, $\alpha$-glucosidase, a maltotriose-generating enzyme, and $\alpha$-amylase have been added, or a step of cooking the rice to which a cyclodextrin-generating enzyme and 4-$\alpha$-glucanotransferase have been added.
F: a step of storing the cooked rice obtained by rice cooking.
G: a step of deactivating the enzyme.
H: a step of freezing the cooked rice obtained by rice cooking.
I: a step of thawing the frozen cooked rice.
J: a step of processing the cooked rice.
K: a step of recovering the cooked rice.

Step C may be carried out before, after, or simultaneously with one or more steps selected from step A, step B, and step D, and step C may be carried out multiple times. Either one of steps B and E may be performed, or both may be performed. Steps D, F, G, H, I, J, and K are not essential and can be performed as needed. Furthermore, step G can be carried out multiple times as necessary after step D, during step D, before or after step E, simultaneously with step E, or before or after step F. Furthermore, when steps E and G are carried out simultaneously, the enzyme can be deactivated by heating during the rice cooking step. That is, step E can be performed instead of step G. In addition, when a plurality of enzymes are used, enzyme deactivation can be carried out during treatment with the enzymes. For example, when a plurality of enzymes are used for treatment in the soaking step D, the enzyme deactivation step G can be carried out as appropriate during the soaking step D.

3. Method for producing cooked rice

The method for producing cooked rice according to the present technology is a method including a rice cooking step of cooking rice to which a cyclodextrin-generating enzyme has been added. In the rice cooking step, rice to which 4-$\alpha$-glucanotransferase has been added in addition to the cyclodextrin-generating enzyme can also be cooked. Furthermore, the method for producing cooked rice according to the present technology can appropriately select and carry out a cyclodextrin-generating enzyme addition step, a soaking step, a storing step, a freezing step, a thawing step, a processing step, a recovery step, and other steps commonly used in the production of cooked rice, in addition to the rice cooking step. The details and amounts of the cyclodextrin-generating enzyme and 4-$\alpha$-glucanotransferase to be added are the same as those of the enzymes used in the aforementioned modifier for cooked rice, and therefore will not be explained here. Furthermore, the details of each step are the same as those of the method for modifying cooked rice described above, so a detailed explanation will be omitted here.
The form of distribution of cooked rice modified by the method for modifying cooked rice according to the present technology and cooked rice obtained by the method for producing cooked rice according to the present technology is not particularly limited. For example, these can be distributed in a frozen state, a refrigerated state, a chilled state, or at room temperature. In addition, cooked rice that has been frozen, refrigerated, chilled, or stored at room temperature may be heat-cooked in a store or the like and distributed as processed cooked rice that has been already cooked.

EXAMPLES

The present invention will be described in more detail below based on examples. The examples described below are merely representative examples of the present invention, and the scope of the present invention should not be construed as being narrowed.

1. Raw material

The raw materials and enzymes used in the examples are shown in Table 1 below.

[Table 1]

| Substance name | Product name | Available from |
|---|---|---|
| Rice | 2022 Niigata Prefecture-grown Koshihikari pre-washed rice (Japonica variery) or 2023 Niigata Prefecture-grown Koshihikari polished rice (Japonica variery) | - |
| Cyclodextrin-generating enzyme | Cyclodextrin glucanotransferase derived from *Anoxybacillus caldiproteolyticus* (formerly *Geobacillus stearothermophilus*) | Amano Enzyme Inc. |
| Lipase | Lipase derived from *Rhizopus oryzae* | Amano Enzyme Inc. |
| Cellulase | Cellulase derived from *Trichoderma viride* | Amano Enzyme Inc. |
| Hemicellulase | Hemicellulase derived from *Aspergillus niger* | Amano Enzyme Inc. |
| Protease | Protease derived from *Bacillus amyloliquefaciens* | Amano Enzyme Inc. |
| α-glucosidase | α-glucosidase derived from *genus Aspergillus* | Amano Enzyme Inc. |
| Maltotriose-generating enzyme | Maltotriohydrolase derived from *Microbacterium sp.* | Amano Enzyme Inc. |
| α-amylase | α-amylase derived from *Bacillus amyloliquefaciens* | Amano Enzyme Inc. |
| 4-α-glucanotransferase | 4-α-glucanotransferase derived from *Aeribacillus pallidus* (formerly *Geobacillus pallidus)* | Amano Enzyme Inc. |

2. Enzyme activity measurement method

[Cyclodextrin-generating enzyme]

The activity of the cyclodextrin-generating enzyme can be measured by a method based on the cyclodextrin-generating enzyme activity test method in the 9-th edition of the Japan's Specifications and Standards for Food Additives.
20 mL of water was added to 1.0 g of potato starch, and 5 mL of sodium hydroxide reagent solution (1 mol/L) was gradually added while stirring to form a paste. After heating in a boiling water bath with stirring for 3 minutes, 25 mL of water was added, cooled with running water, adjusted to pH 5.5 with acetic acid reagent solution (1 mol/L), and further added with water to make 100 mL, which was used as a substrate solution. 10 mL of the substrate solution was measured out and heated at 40°C for 10 minutes, and 1 mL of the enzyme solution was added and mixed. After incubation at 40°C for 10 minutes, the reaction was stopped by adding 10 mL of hydrochloric acid reagent solution (0.1 mol/L). To 1 mL of this reaction solution, 10 mL of iodine-potassium iodide reagent solution (0.4 mmol/L) was added and mixed to prepare a test solution. Note that the iodine-potassium iodide reagent solution was prepared by dissolving 10.0 g of potassium iodide and 1.0 g of iodine in water to make 100 mL, and then diluting 200 times with water. A control solution was prepared by using water instead of the reaction solution, and the absorbance at 660 nm of the test solution and the control solution was measured. The amount of enzyme that reduces the blue coloration of starch with iodine by 1% in 1 minute was defined as 1 unit (U).

[Lipase]

The activity of lipase can be measured by a method based on the lipase activity test method in the 9-th edition of the Japan's Specifications and Standards for Food Additives.

First, 45 g of olive oil was mixed with 150 mL of an emulsion (18.5 g/L of polyvinyl alcohol (fully saponified, degree of saponification 98.8±0.2), 1.5 g/L of polyvinyl alcohol (partially saponified, degree of saponification 88.8±1.0)) and emulsified using a homogenizer to prepare a substrate solution. 1 mL of lipase enzyme solution was added to 5 mL of the prepared substrate solution and 4 mL of 0.1 mol/L phosphate buffer (pH 7.0), and the reaction was carried out at 37°C. After 30 minutes, 10 mL of an ethanol-acetone mixture was added to stop the enzyme reaction. Next, 10 mL of 0.05 mol/L sodium hydroxide solution and 10 mL of an ethanol-acetone mixture were added, and the mixture was titrated to pH 10 with 0.05 mol/L hydrochloric acid. The amount of enzyme that increases 1 $\mu$mol of fatty acid per minute is defined as 1 unit (1 U).

[Cellulase]

The activity of cellulase can be measured by a method based on the cellulase activity test method in the 9-th edition of the Japan's Specifications and Standards for Food Additives.

In advance, approximately 1 g of carmellose sodium (also known as carboxymethylcellulose sodium) (etherification degree 0.62-0.68) was precisely weighed, and dried at 105°C for 4 hours, after which the weight loss was measured. Carmellose sodium equivalent to 0.625 g of the dried product was accurately weighed and placed in a 100 mL Erlenmeyer flask, 50 mL of water was added, and the mixture was heated to dissolve. After cooling, 10 mL of 1 mol/L acetic acid-sodium acetate buffer (pH 4.5) and water were added to make exactly 100 mL, which was used as the substrate solution. 4 mL of the substrate solution was accurately measured and placed in a 50 mL Nessler tube, and after leaving it at 37±0.5°C for 10 minutes or more, 1 mL of a sample solution was accurately measured and added, and the mixture was immediately shaken and mixed. This solution was left to stand at 37±0.5°C for exactly 30 minutes, and 2 mL of alkaline copper reagent solution was exactly added and mixed by shaking, and the Nessler tube was then stoppered and heated in a water bath for exactly 30 minutes. After cooling with water, 2 mL of Nelson's solution was added accurately and the mixture was shaken well, and further, 3 mL of 0.5 mol/L sodium hydroxide reagent solution was added exactly and the mixture was shaken to dissolve the precipitate, and after leaving the mixture for 20 minutes, 13 mL of 1 mol/L acetic acid-sodium acetate buffer (pH 4.5) was added exactly. 1 mL of this solution was accurately measured, and 9 mL of 1 mol/L acetic acid-sodium acetate buffer (pH 4.5) was exactly added thereto, followed by shaking well to mix. The absorbance (A1) of this solution was measured at a wavelength of 750 nm using water as a control.

Separately, 1 mL of a sample solution was accurately measured and placed in a 50 mL Nessler tube, 2 mL of alkaline copper reagent solution was accurately added and the mixture was shaken, then, 4 mL of a substrate solution was accurately measured and added, and the mixture was shaken, then, the absorbance (A2) was measured in the same procedure as described above. Under these conditions, for the cellulase activity, the amount of enzyme that increases the reducing power equivalent to 1 $\mu$mole of glucose per minute was defined as 1 unit, and the cellulase activity per 1 g or 1 mL of a sample (U/g, U/mL) was calculated by the following formula.

$$\text{Cellulase activity (U/g, U/mL)} = G \times (1/30) \times (1/0.180) \times n$$

G: amount of generated glucose (mg) calculated from the (A1 - A2/a) value using a glucose calibration curve
1/30: conversion factor to per minute
1/0.180: glucose 1 $\mu$mole = 0.180 mg
a: slope of glucose calibration curve
n: dilution factor per 1 g or 1 mL of sample

[Hemicellulase]

The activity of hemicellulase can be measured by a method based on the hemicellulase activity test method in the 9-th edition of the Japan's Specifications and Standards for Food Additives.

An appropriate amount of enzyme was measured, dissolved or uniformly dispersed in water added, and diluted appropriately to prepare a sample solution. 0.50 g of xylan was weighed, and about 30 mL of water was added thereto. The mixture was heated with stirring, and boiled for 3 minutes after it started to boil. After cooling, water was added to this solution to make 50 mL, which was used as a substrate solution. 1 mL of the substrate solution was measured into a test tube, 3 mL of 0.1 mol/L acetate buffer (pH 4.5) was added, and the mixture was heated at 40°C for 10 minutes. 1 mL of the sample solution was then added, shaken, and heated at 40°C for 30 minutes. To this solution was added 2 mL of Somogyi reagent solution (III), mixed, the test tube was stoppered, and heated in a boiling water bath for 20 minutes, and then immediately cooled. After cooling, 1 mL of Nelson's reagent solution was added to this solution, and the mixture was shaken well until the red precipitate was completely dissolved. After leaving the mixture at room temperature for about 20 minutes, water was added to make the total volume 25 mL. This solution was centrifuged at 25°C at 3,000 rpm for 10 minutes, and the supernatant was used as the test solution.

Separately, 1 mL of the substrate solution was measured into a test tube, and 3 mL of 0.1 mol/L acetate buffer (pH 4.5) and 2 mL of Somogyi reagent solution (III) were added and shaken. Then, 1 mL of the sample solution was added, and the test tube was stoppered and heated in a boiling water bath for 20 minutes, and immediately cooled. The same procedure as in the preparation of the test solution was then carried out to prepare a control solution. The absorbance of the test solution and the control solution was measured at a wavelength of 500 nm using water as a control. The amount of enzyme that produces reducing sugars equivalent to 1 mg of xylose per minute under these conditions was defined as 100 units, and the enzyme activity was calculated.

[Protease]

The activity of protease can be measured by a method based on the protease activity test method in the 9-th edition of the Japan's Specifications and Standards for Food Additives.
5 mL of 0.6% (w/v) casein solution (0.05 mol/L sodium hydrogen phosphate, pH 8.0) was heated at 37°C for 10 minutes, and then 1 mL of the sample solution containing protease was added and immediately shaken. This solution was allowed to stand at 37°C for 10 minutes, and then 5 mL of trichloroacetic acid reagent solution (1.8% (w/v) trichloroacetic acid, 1.8% (w/v) sodium acetate, and 0.33 mol/L acetic acid) was added and shaken, and the solution was again allowed to stand at 37°C for 30 minutes and filtered. The first 3 mL of filtrate was discarded, and the next 2 mL of filtrate was measured, to which 5 mL of 0.55 mol/L sodium carbonate reagent solution and 1 mL of Folin's reagent solution (1→3) were added, shaken well, and allowed to stand at 37°C for 30 minutes. The absorbance AT of this solution (enzyme reaction solution) was measured at a wavelength of 660 nm, using water as a control.
Separately, the absorbance AB was measured on a solution (blank) prepared by the same operation as for the enzyme reaction solution described above, except that 1 mL of a sample solution containing protease was measured, 5 mL of trichloroacetic acid reagent solution (1.8% (w/v) trichloroacetic acid, 1.8% (w/v) sodium acetate, and 0.33 mol/L acetic acid) was added, and the mixture was shaken, then, 5 mL of 0.6% (w/v) casein solution (0.05 mol/L sodium hydrogen phosphate, pH 8.0) was added, and the mixture was immediately shaken and left to stand at 37°C for 30 minutes.
The amount of enzyme that causes an increase in the Folin's reagent solution coloration substance equivalent to 1 μg of tyrosine per minute was defined as 1 unit (1 U).
1 mL, 2 mL, 3 mL, and 4 mL of a 1 mg/mL tyrosine standard stock solution (0.2 mol/L hydrochloric acid) were measured, and 0.2 mol/L hydrochloric acid reagent solution was added to each to make up to 100 mL. 2 mL of each solution was measured, and 5 mL of 0.55 mol/L sodium carbonate reagent solution and 1 mL of Folin's reagent solution (1→3) were added, immediately shaken and mixed, and then allowed to stand at 37°C for 30 minutes. For each of these solutions, 2 mL of 0.2 mol/L hydrochloric acid reagent solution was measured and the same procedure as described above was carried out to obtain a solution as a control, and the absorbances A1, A2, A3 and A4 at a wavelength of 660 nm were measured. The vertical axis represents absorbances A1, A2, A3 and A4, and the horizontal axis represents the amount of tyrosine (μg) in 2 mL of each solution, to create a calibration curve, and the amount of tyrosine (μg) per absorbance difference of 1 was calculated.

$$\text{Protease activity (U/g, U/mL)} = (AT - AB) \times F \times 11/2 \times 1/10 \times 1/M$$

AT: absorbance of enzyme reaction solution
AB: absorbance of blank
F: amount of tyrosine (μg) when the absorbance difference obtained from the tyrosine calibration curve is 1
11/2: conversion factor to total liquid volume after reaction has stopped
1/10: conversion factor to per minute of reaction time
M: amount of sample in 1 mL of sample solution (g or mL)

[α-Glucosidase]

The activity of α-glucosidase can be measured by a method based on the α-glucosidase activity test method 2 in the 9-th edition of the Japan's Specifications and Standards for Food Additives.

(1) 2.0 g of α-methyl-D-glucoside was weighed and dissolved in water added to make 100 mL, thereby preparing an α-methyl-D-glucoside solution. 1 mL of α-methyl-D-glucoside solution and 1 mL of 0.02 mol/L acetic acid-sodium acetate buffer (pH 5.0) were measured into a test tube and left to stand at 40°C for 10 to 15 minutes, after which 0.5 mL of an aqueous solution containing transglucosidase (enzyme solution) was added and the mixture was shaken well. This was left at 40°C for exactly 60 minutes. After exactly 60 minutes, the sample was placed in a boiling water bath, heated for exactly 5 minutes, and cooled under running water.

(2) 3 mL of Glucose C II-Test Wako (FUJIFILM Wako Pure Chemical Corporation) color-developing solution was measured into a test tube, 0.2 mL of the reaction solution obtained in (1) was added, and the mixture was shaken well and then left to stand at 40°C for exactly 5 minutes. The absorbance (E60) of this solution was measured at a wavelength of 505 nm using water as a control. Separately, as a blank, 1 mL of 0.02 mol/L acetic acid-sodium acetate buffer (pH 5.0) and 0.5 mL of an aqueous solution containing transglucosidase (enzyme solution) were measured into a test tube, heated in a boiling water bath for exactly 5 minutes, and then cooled under running water. After cooling, 1 mL of $\alpha$-methyl-D-glucoside solution was added, and the absorbance (E0) was measured in the same manner as above.

(3) Glucose C II Test Wako's glucose standard solution I or II was diluted with water to the specified concentration (20 mg/dL, 40 mg/dL). 3 mL of Glucose CII Test Wako coloring solution was measured into a test tube, and 0.2 mL of the above glucose solution was added to each, and after shaking well, the mixture was left to stand at 40°C for exactly 5 minutes. The absorbance (ES) of this solution was measured at a wavelength of 505 nm using water as a control. Separately, as a blank, 0.2 mL of water was used instead of the glucose solution, and the absorbance (EB) was measured in the same manner as above. A glucose calibration curve was prepared from the absorbance values obtained, and the amount of glucose ($\mu$g) (G) was determined when the absorbance difference was 1.000.

Under these conditions, the amount of enzyme required to produce 1 $\mu$g of glucose in 2.5 mL of the reaction solution in 60 minutes was defined as 1 unit (1 U), and the enzyme activity was calculated using the following formula:

$$\alpha\text{-Glucosidase activity (U/g, U/mL)} = (E60 - E0) \times G \times 2.5/0.1 \times n/0.5$$

E60: absorbance of reaction solution
E0: absorbance of blank solution
G: amount of glucose ($\mu$g) when the absorbance difference is 1.000
2.5: volume of reaction system liquid (mL)
0.1: amount of reaction solution collected (mL)
0.5: amount of enzyme solution collected (mL)
n: dilution factor per 1 g or 1 mL of sample

[Maltotriose-generating enzyme]

The activity of the maltotriose-generating enzyme can be measured by a method based on the maltotriohydrolase activity test method in the 9-th edition of the Japan's Specifications and Standards for Food Additives.

Soluble starch as a substrate was treated with an enzyme, and the resulting reducing sugar was quantified colorimetrically using the Somogyi-Nelson method. 0.5 mL of the soluble starch solution and 0.4 mL of 0.1 mol/L acetic acid-sodium acetate buffer (pH 6.0) (containing 0.05 mol/L CaCl$_2$) were measured into a 50 mL Nessler tube, shaken well, and left to stand at 40$\pm$0.5°C for 10 to 15 minutes, after which 0.1 mL of the sample solution was added and immediately shaken. This solution was left to stand at 40$\pm$0.5°C for exactly 15 minutes, after which 1 mL of alkaline copper reagent solution was added, the solution was shaken and mixed, the stopper was sealed, and the solution was heated in a boiling water bath for exactly 20 minutes and immediately cooled. After cooling, 1 mL of Nelson's solution was added, and the mixture was shaken thoroughly until the red precipitate of cuprous oxide was completely dissolved. The mixture was then left to stand at room temperature for 20 minutes, and 22 mL of water was added, followed by shaking thoroughly. The absorbance of this solution was measured at a wavelength of 520 nm using water as a control. The production of reducing sugars equivalent to 1 $\mu$mol of glucose per minute was defined as one unit.

[Method for measuring $\alpha$-amylase activity]

10 mL of 1% potato starch substrate solution (0.1 mol/L acetic acid (pH 5.0)) was heated at 37°C for 10 minutes, and then 1 mL of the sample solution containing $\alpha$-amylase was added and immediately shaken. This solution was allowed to stand at 37°C for 10 minutes, and then 1 mL of this solution was added to 10 mL of 0.1 mol/L hydrochloric acid reagent solution, followed by immediate shaking. Next, 0.5 mL of this solution was measured, and 10 mL of 0.0002 mol/L iodine reagent solution (Japanese Pharmacopoeia) was added and shaken, and then the absorbance (AT) at a wavelength of 660 nm was measured using water as a control. Separately, 1 mL of water was added instead of the sample solution and the same procedure was carried out, and the absorbance (AB) was measured. Note that the 0.0002 mol/L iodine reagent solution (Japanese Pharmacopoeia) was prepared by adding 10 mL of water to 12.7 g of iodine and 25 g of potassium iodide, thoroughly mixing them while rubbing, then, adding water to make 100 mL, and then diluting 2500 times with water. The $\alpha$-amylase activity was calculated using the following formula. The amount of enzyme that reduces the coloration of potato starch with iodine by 10% in one minute was defined as 1 unit (1 U).

$$\alpha\text{-Amylase activity (U/g, U/mL)} = \{(AB - AT)/AB\} \times 1/W$$

AT: absorbance of reaction solution
AB: absorbance of blank solution
W: amount of sample in 1 mL of sample solution (g or mL)

[Method for measuring 4-$\alpha$-glucanotransferase activity]

180 mg of maltotetraose (manufactured by Nagase Viita Co., Ltd.) was weighed and placed in a 20 mL volumetric flask. Approximately 15 mL of 10 mmol/L MES buffer (pH 6.5) was added to dissolve the sample. After dissolution, 10 mmol/L MES buffer (pH 6.5) was added to make a final volume of 20 mL, which was used as a substrate solution.
2 mL of the substrate solution was measured into a test tube and left at 40±0.5°C for 10 to 15 minutes, after which 0.5 mL of the sample solution was added, shaken well, and left at 40±0.5°C for exactly 60 minutes. After being left to stand, the sample was placed in a boiling water bath and heated for exactly 5 minutes, and then cooled in running water. The produced glucose was quantified using LabAssay Glucose (manufactured by FUJIFILM Wako Pure Chemical Corporation). The LabAssay Glucose is a kit consisting of a coloring agent containing mutarotase, glucose oxidase, peroxidase, 4-aminoantipyrine, and ascorbic acid oxidase, and a buffer containing phosphate buffer (pH 7.1) and phenol, and capable of determining the glucose concentration by measuring the red pigment generated by the oxidative condensation of phenol and 4-aminoantipyrine.
Under these conditions, the amount of enzyme that produces 1 $\mu$mol of glucose per minute was defined as 1 unit.

3. Experimental Example

[Experimental Example 1]

(1) Method

375g of 2022 Niigata Prefecture-grown Koshihikari pre-washed rice was weighed and placed in a rice kettle. The enzyme shown in Table 1 was dissolved in 525 g of water and added into the rice kettle, which was then set in a rice cooker and soaking was performed for 2 hours. The temperature of the water used during soaking was set to 30°C. After soaking, the rice was cooked in the usual way using a rice cooker ("HOMESWAN SRC-35" manufactured by NIITSU KOUKI Co., Ltd.). After cooking, the rice was steamed for 10 minutes, then the finished cooked rice was loosened with a rice paddle, and left to cool to room temperature for 1 hour with a double layer of paper towels.

(2) Sensory evaluation

20 g each of the left-to-cool enzyme-untreated cooked rice (control example) and left-to-cool cooked rice from Examples 1 to 8 were weighed, and rice balls were made in a commercially available rice ball mold (mini size), and the sensory evaluation was carried out. The cooked rice of the rice balls made as described above was evaluated for aroma, whiteness, ease of separating grains, distinctness of grains, sweetness, hardness/softness, and stickiness at the time of completion and after storage at 10°C for 1 day according to the evaluation criteria shown in Table 2 below. The control example was given a score of 0, and the evaluation was carried out by five panelists using a scoring system ranging from -3 to 3 points.

[Table 2]

| Score | -3 | -2 | -1 | 0 | 1 | 2 | 3 |
|---|---|---|---|---|---|---|---|
| Aroma | Quite poor | Little poor | Slightly poor | Similarly to control example | Slightly good | Little good | Quite good |

(continued)

| Score | -3 | -2 | -1 | 0 | 1 | 2 | 3 |
|---|---|---|---|---|---|---|---|
| Ease of separating grains | Quite poor | Little poor | Slightly poor | Similarly to control example | Slightly good | Little good | Quite good |
| Distinctness of grains | Quite poor | Little poor | Slightly poor | Similarly to control example | Slightly good | Little good | Quite good |
| Sweetness | Quite not sweet | Little not sweet | Slightly not sweet | Similarly to control example | Slightly sweet | Little sweet | Quite sweet |
| Hardness/softness | Quite soft | Little soft | Slightly soft | Similarly to control example | Slightly hard | Little hard | Quite hard |
| Stickiness | Quite week | Little weak | Slightly weak | Similarly to control example | Slightly strong | Little strong | Quite strong |

±3: "Quite" First tasting (first bite) gives a convincement of clear didfference.
±2: "Little" Frist tasting (first bite) doe not give a clear conviction, but it informs that there is a certain degree of difference.
±1: "Slightly" First tasting (first bite) gives no clear difference, but second tasting (second bite) gets a difference.
0: "Similar to control example" It is difficult to determine whether there is a difference even after second tasting (second bite).

(3) The results after being left to cool and before storing are shown in Table 3 below.

[Table 3]

| | | | Control example | Example | | | | | | | |
|---|---|---|---|---|---|---|---|---|---|---|---|
| | | | | 1 | 2 | 3 | 4 | 5 | 6 | 7 | 8 |
| Enzymes used | Cyclodextrin-generating enzyme | U/g-raw rice | - | 0.40 | - | - | - | - | - | - | - |
| | Lipase | | - | - | 0.15 | - | - | - | - | - | - |
| | Cellulase | | - | - | - | 0.28 | - | - | - | - | - |
| | Hemicellulase | | - | - | - | - | 90.00 | - | - | - | - |
| | Protease | | - | - | - | - | - | 70.00 | - | - | - |
| | α-glucosidase | | - | - | - | - | - | - | 0.11 | - | - |
| | Maltotriose-generating enzyme | | - | - | - | - | - | - | - | 1.20 | - |
| | α-amylase | | - | - | - | - | - | - | - | - | 4.50 |
| Sensory evaluation | Aroma | After being left to cool and before storing | 0.0 | 0.6 | -0.2 | -0.4 | -0.2 | -1.4 | 0.4 | 0.8 | -0.4 |
| | Ease of separating grains | After being left to cool and before storing | 0.0 | 0.4 | 0.0 | -1.0 | -1.0 | -2.6 | -0.4 | 1.0 | 1.4 |
| | Distinctness of grains | After being left to cool and before storing | 0.0 | -0.8 | 0.4 | 0.6 | 0.4 | -2.6 | -0.8 | 0.8 | -1.2 |
| | Sweetness | After being left to cool and before storing | 0.0 | -0.4 | 0.4 | -0.2 | 0.8 | -0.4 | 1.4 | 0.8 | -0.2 |
| | Hardness/softness | After being left to cool and before storing | 0.0 | 0.0 | -0.6 | 1.0 | -0.4 | -1.6 | -0.2 | 0.6 | -1.6 |
| | Stickiness | After being left to cool and before storing | 0.0 | 1.2 | 0.6 | 0.0 | 0.6 | 1.4 | 0.4 | 0.8 | 2.0 |

(4) Discussion

As shown in Table 3, the following points were confirmed for each enzyme.

[Cyclodextrin-generating enzyme] (Example 1)

By adding a cyclodextrin-generating enzyme, the aroma, ease of separating grains and stickiness of cooked rice were improved after being left to cool and before storing. That is, the addition of a cyclodextrin-generating enzyme manifested effects in holding the aroma, in improving the ease of separating grains, and in enhancing the stickiness, of cooked rice. Furthermore, after storage at 10°C for 1 day, the addition of the cyclodextrin-generating enzyme in Example 1 allowed the aroma, ease of separating grains, distinctness of grains, hardness, and stickiness to be maintained compared to the control example that was not treated with the enzyme. That is, it showed an effect of suppressing the aging of cooked rice when stored at 10°C. Furthermore, it was possible to confirm an effect of enhancing the sweetness of cooked rice to which a cyclodextrin-generating enzyme had been added by storing the cooked rice at 10°C for 1 day. Furthermore, by treating with a cyclodextrin-generating enzyme, the effect of high dietary fiber can also be expected.

[Lipase] (Example 2)

By adding lipase, the sweetness, softness, distinctness of grains, and stickiness of the cooked rice were improved after being left to cool and before storing. Generally, as stickiness increases, the distinctness of grains decreases, but with the present technology, it has been confirmed that by adding lipase, cooked rice can be produced that combines the contradictory properties of distinctness of grains and stickiness. Furthermore, after storage at 10°C for 1 day, Example 2 showed an effect of suppressing aging, since the addition of lipase was able to hold and enhance the sweetness, aroma, softness, ease of separating grains, distinctness of grains, and stickiness compared to the enzyme-untreated sample (control example).

[Cellulase] (Example 3)

By adding cellulase, the hardness of cooked rice after being left to cool and before storing increased, and the distinctness of grains thereof was improved. It was found that adding cellulase resulted in the production of harder cooked rice with good distinctness of grains. Furthermore, it was confirmed that the cooked rice to which cellulase had been added had an effect of enhancing the sweetness of the cooked rice when stored at 10°C for 1 day.

[Hemicellulase] (Example 4)

By adding hemicellulase, the distinctness of grains, softness, and stickiness of cooked rice after being left to cool and before storing were improved. Generally, as stickiness and softness increase, the distinctness of grains decreases, but with the present technology, it has been confirmed that by adding hemicellulase, cooked rice can be obtained that combines the contradictory properties of distinctness of grains with stickiness and softness. Furthermore, it was confirmed that adding hemicellulase had an effect of enhancing the sweetness of cooked rice. Furthermore, after storage at 10°C for 1 day, it was confirmed that the addition of hemicellulase in Example 4 allowed the stickiness and softness to be held compared to the enzyme-untreated sample (control example). In other words, the addition of hemicellulase was confirmed to have an effect of suppressing aging.

[Protease] (Example 5)

By adding protease, the softness and stickiness of cooked rice after being left to cool and before storing were improved. It was shown that adding protease resulted in softer cooked rice. Furthermore, after storage at 10°C for 1 day, Example 5 was able to hold its softness and stickiness by adding protease compared to the enzyme-untreated product (control example), demonstrating an effect of suppressing aging. Furthermore, it was found that the present technology reduces the aroma and sweetness characteristic of cooked rice by adding protease. That is, it was confirmed that the flavor of cooked rice can be modified by adding protease. This flavor-modifying effect persisted even after storage at 10°C for 1 day. By reducing the aroma and sweetness unique to cooked rice, the influence on other seasonings and aromas can be reduced, making it possible to apply the technology to a variety of uses.

[$\alpha$-Glucosidase] (Example 6)

By adding $\alpha$-glucosidase, the aroma, sweetness, softness and stickiness of cooked rice after being left to cool and before storing were improved. That is, it was shown that the addition of α-glucosidase resulted in softer cooked rice with enhanced aroma and sweetness. In the present technology, it was confirmed that adding α-glucosidase in particular has an effect of enhancing the sweetness of cooked rice. Furthermore, after storage at 10°C for 1 day, Example 6 showed an effect of suppressing aging because the addition of α-glucosidase was able to hold the aroma, distinctness of grains, sweetness, softness, and stickiness compared to the enzyme-untreated product (control example). In particular, the effect of enhancing sweetness was held even after storage at 10°C for 1 day.

[Maltotriose-generating enzyme] (Example 7)

By adding a maltotriose-generating enzyme, the aroma, ease of separating grains, distinctness of grains, sweetness, hardness, and stickiness of cooked rice after being left to cool and before storing were improved. It was shown that the addition of a maltotriose-generating enzyme resulted in the production of better-balanced cooked rice.

[α-Amylase] (Example 8)

By adding α-amylase, the ease of separating grains and stickiness of cooked rice after being left to cool and before storing were improved. Generally, as stickiness is improved, ease of separating grains becomes worse, but with the present technology, it has been confirmed that by adding α-amylase, cooked rice can be obtained that has both the contradictory properties of ease of separating grains and stickiness.

[Experimental Example 2]

(1) Method

100 g of 2023 Niigata Prefecture-grown Koshihikari polished rice (raw rice) was weighed and placed in a colander, and the polished rice was then placed in a bowl filled with purified water that had been brought to room temperature, and gently stirred clockwise by hand 10 times. The purified water was replaced and the same procedure was repeated four times. After washing the rice, the water was drained and the rice was transferred to a rice kettle. The enzyme shown in Table 4 was dissolved in 160 g of water and added into the rice kettle, which was then set in a rice cooker and soaking at room temperature was performed for 1 hour. After soaking, the rice was cooked in the
usual way using a rice cooker (Panasonic: SR-03GP). After cooking, the rice was steamed for 10 minutes, then the finished cooked rice was placed in a Tupperware container, spread out, and allowed to cool to room temperature.

(2) Sensory evaluation

Using the same methods as in Experimental Example 1, the ease of separating grains, distinctness of grains, and hardness/softness were evaluated after being left to cool and before storing.

(3) The results are shown in Table 4 below.

[Table 4]

| | | | Control example | Example 9 |
|---|---|---|---|---|
| Enzymes used | Cyclodextrin-generating enzyme | U/g-raw rice | - | 0.20 |
| | 4-α-glucanotransferase | | - | 3.00 |
| Sensory evaluation | Ease of separating grains | After being left to cool and before storing | 0.0 | -1.0 |
| | Distinctness of grains | After being left to cool and before storing | 0.0 | 3.0 |
| | Hardness/softness | After being left to cool and before storing | 0.0 | 1.0 |

(4) Discussion

By adding a cyclodextrin-generating enzyme and 4-α-glucanotransferase, the hardness of cooked rice after being left to cool and before storing increased, and the distinctness of grains thereof were improved. It was found that the combined use of a cyclodextrin-generating enzyme and 4-α-glucanotransferase produced harder cooked rice with better distinctness of grains.

**Claims**

1. A modifier for cooked rice comprising one or more enzymes selected from a cyclodextrin-generating enzyme, lipase, cellulase, hemicellulase, protease, α-glucosidase, a maltotriose-generating enzyme, and α-amylase, or comprising a cyclodextrin-generating enzyme and 4-α-glucanotransferase.

2. The modifier for cooked rice according to claim 1, which modifies one or more qualities of cooked rice selected from aroma, ease of separating grains, distinctness of grains, sweetness, hardness, softness, and stickiness.

3. A method for modifying cooked rice, comprising an enzyme addition step of adding one or more enzymes selected from a cyclodextrin-generating enzyme, lipase, cellulase, hemicellulase, protease, α-glucosidase, a maltotriose-generating enzyme, and α-amylase to rice, or adding a cyclodextrin-generating enzyme and 4-α-glucanotransferase to rice.

4. A method for modifying cooked rice, comprising a rice cooking step of cooking rice to which one or more enzymes selected from a cyclodextrin-generating enzyme, lipase, cellulase, hemicellulase, protease, α-glucosidase, a maltotriose-generating enzyme, and α-amylase have been added, or cooking rice to which a cyclodextrin-generating enzyme and 4-α-glucanotransferase have been added.

5. The method for modifying cooked rice according to claim 3 or 4, which modifies one or more qualities of cooked rice selected from aroma, ease of separating grains, distinctness of grains, sweetness, hardness, softness, and stickiness.

6. A method for producing cooked rice, comprising a rice cooking step of cooking rice to which a cyclodextrin-generating enzyme has been added.

7. The method for producing cooked rice according to claim 6, wherein the rice is rice to which 4-α-glucanotransferase has been added.

## INTERNATIONAL SEARCH REPORT

| International application No. |
| --- |
| **PCT/JP2024/032935** |

| A. | CLASSIFICATION OF SUBJECT MATTER |
| --- | --- |

*A23L 7/10*(2016.01)i
FI: A23L7/10 E; A23L7/10 B

According to International Patent Classification (IPC) or to both national classification and IPC

| B. | FIELDS SEARCHED |
| --- | --- |

Minimum documentation searched (classification system followed by classification symbols)

A23L7/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 03-083549 A (NAKANO VINEGAR CO., LTD.) 09 April 1991 (1991-04-09) claims, document 1, p. 1, right column, lines 1-4, document 1, p. 3, upper right column, line 17 to lower right column, line 5 | 1-6 |
| Y | | 7 |
| X | JP 06-141794 A (MATSUNAGA, Akiko) 24 May 1994 (1994-05-24) claims | 1-5 |
| X | JP 07-289186 A (MATSUNAGA, Akiko) 07 November 1995 (1995-11-07) claims | 1-5 |
| X | JP 02-079944 A (SATAKE ENG CO., LTD.) 20 March 1990 (1990-03-20) claims, examples | 1-5 |
| X | JP 02-072836 A (SATAKE ENG CO., LTD.) 13 March 1990 (1990-03-13) claims | 1-5 |

[✓] Further documents are listed in the continuation of Box C.    [✓] See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 October 2024** | **12 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 778 402 A1**

**INTERNATIONAL SEARCH REPORT**

| International application No. |
| --- |
| **PCT/JP2024/032935** |

**C.    DOCUMENTS CONSIDERED TO BE RELEVANT**

| Category* | Citation of document, with indication, where appropriate, of the relevant passages | Relevant to claim No. |
| --- | --- | --- |
| X | JP 58-086050 A (OTSUKA YAKUHIN KOGYO KK) 23 May 1983 (1983-05-23)<br>claims | 1-5 |
| X | JP 60-058046 A (SEISAN KAIHATSU KAGAKU KENKYUSHO) 04 April 1985<br>(1985-04-04)<br>claims | 1-5 |
| X | JP 2017-051112 A (SHOWA SANGYO CO., LTD.) 16 March 2017 (2017-03-16)<br>claims, examples | 1-5 |
| X | WO 2022/004402 A1 (MIZKAN HOLDINGS CO., LTD.) 06 January 2022 (2022-01-06)<br>claims, paragraph [0065] | 1-5 |
| Y | | 7 |
| P, X | WO 2024/181489 A1 (MIZKAN HOLDINGS CO., LTD.) 06 September 2024 (2024-09-06)<br>claims, examples | 1-7 |

Form PCT/ISA/210 (second sheet) (July 2022)

**INTERNATIONAL SEARCH REPORT**
Information on patent family members

International application No.

**PCT/JP2024/032935**

| Patent document cited in search report | | | Publication date (day/month/year) | Patent family member(s) | | | Publication date (day/month/year) |
|---|---|---|---|---|---|---|---|
| JP | 03-083549 | A | 09 April 1991 | (Family: none) | | | |
| JP | 06-141794 | A | 24 May 1994 | (Family: none) | | | |
| JP | 07-289186 | A | 07 November 1995 | (Family: none) | | | |
| JP | 02-079944 | A | 20 March 1990 | (Family: none) | | | |
| JP | 02-072836 | A | 13 March 1990 | (Family: none) | | | |
| JP | 58-086050 | A | 23 May 1983 | (Family: none) | | | |
| JP | 60-058046 | A | 04 April 1985 | (Family: none) | | | |
| JP | 2017-051112 | A | 16 March 2017 | (Family: none) | | | |
| WO | 2022/004402 | A1 | 06 January 2022 | JP | 2024-71597 | A | |
| | | | | TW | 202203784 | A | |
| WO | 2024/181489 | A1 | 06 September 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020110146 A

- JP 2018113872 A